(19) Europäisches Patentamt
European Patent Office
Office européen des brevets

(11) **EP 2 677 397 A2**

(12) **EUROPEAN PATENT APPLICATION**

(43) Date of publication:
**25.12.2013 Bulletin 2013/52**

(51) Int Cl.:
**G06F 3/023** (2006.01)    **G06F 3/0346** (2013.01)

(21) Application number: **13170394.4**

(22) Date of filing: **04.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.06.2012 JP 2012140161**

(71) Applicant: **FUJITSU LIMITED**
**Kawasaki-shi,**
**Kanagawa 211-8588 (JP)**

(72) Inventors:
 • **Murase, Taichi**
  **Kanagawa, 211-8588 (JP)**

 • **Hara, Nobuyuki**
  **Kanagawa, 211-8588 (JP)**
 • **Moteki, Atsunori**
  **Kanagawa, 211-8588 (JP)**
 • **Matsuda, Takahiro**
  **Kanagawa, 211-8588 (JP)**
 • **Fujimoto, Katsuhito**
  **Kanagawa, 211-8588 (JP)**

(74) Representative: **HOFFMANN EITLE**
**Patent- und Rechtsanwälte**
**Arabellastrasse 4**
**81925 München (DE)**

(54) **Character input method and information processing apparatus**

(57)    A character input method to be executed by a computer, the character input method includes: acquiring a first image from an imaging device; detecting an object from the first image; specifying a character group corresponding to a first position of the object detected from the first image, based on correspondence information in which each of a plurality of character groups including a plurality of characters is associated with each of a plurality of regions set for the first image; acquiring a second image acquired from the imaging device at a time different from a time at which the first image is acquired; detecting the object from the second image; and designating one character from the specified character group, based on a second position of the object detected from the second image.

FIG. 5

EP 2 677 397 A2

**Description**

FIELD

The embodiments disclosed in this specification are related to a technique for controlling the inputting of characters.

BACKGROUND

In recent years, the market for keyboardless devices not including a physical keyboard, such as smartphones, tablet devices typified by slate personal computers (PCs) and iPad®, and the like, has rapidly expanded. For character input on keyboardless devices, software keyboards are often used as character input interfaces. Software keyboards include a type using a touch panel, a type using a camera, and a laser, and the like.

In the case of a software keyboard using a touch panel, a keyboard image is displayed on a touch-panel display. When the software keyboard detects a position on the touch panel touched by a user, character input is achieved.

Furthermore, as a software keyboard of a type using cameras, a virtual keyboard using a camera that photographs fingertips of an operator from above and a camera that photographs the fingertips of the operator from a back side is known. For example, a technique regarding such a virtual keyboard is disclosed in Patent Literature 1.

Such a virtual keyboard captures, using two cameras, images of fingertips of an operator disposed on a plane or the like. Then, by comparing the position of a fingertip of the operator with a reference position in a Z direction in three-dimensional coordinate axes represented by X, Y, and Z axes and referring to positional information on virtual keys on the X-Y plane, the virtual keyboard detects a virtual key that the operator intends to operate.

CITATION LIST

[PATENT LITERATURE 1] Japanese Laid-open Patent Publication No. 2003-288156

SUMMARY

TECHNICAL PROBLEM

Here, for a software keyboard of a touch panel type, a keyboard image of a size with which a user is able to perform operation is displayed on a display. Thus, relative to the display area of the display, a certain display area is secured for the keyboard image. Accordingly, a display area for an application allocated to a remaining display area of the display is inevitably reduced.

Meanwhile, for a software keyboard of a type using cameras, a virtual keyboard may be set up at a position separated from a device. For example, a user performs a character input operation on the assumption that a keyboard is arranged on a desk, a floor, or the like.

That is, unlike software keyboards of a touch panel type, software keyboards of a type using cameras do not display a keyboard image of a size with which a user is able to perform an operation. In the case where a user understands the layout and the like of a keyboard, the keyboard may not be displayed on a display. Thus, software keyboards of a type using cameras are capable of achieving character input without blocking displaying of an application.

Here, the virtual keyboard disclosed in the related art uses two cameras that satisfy specific conditions. This is because, with the use of two cameras that satisfy the specific photographing conditions, a camera that photographs hands from above recognizes a keyboard plane represented by two dimensions (for example, an X-Y plane) and a camera that photographs the hands from a front side detects pressing of a key in a third dimensional direction (for example, a Z axis).

However, providing a plurality of cameras on a device that provides the function of a software keyboard is problematic in terms of the cost, a  reduction in the thickness, and a reduction in the size. Furthermore, in the case where the technique of the virtual keyboard described in the related art is implemented with a tablet PC for which a reduction in the thickness and a reduction in the size are demanded, it is not desirable to provide two cameras that satisfy specific conditions on the tablet PC.

Accordingly, it is an object of the technique disclosed in the embodiments to implement a software keyboard using only a single camera.

SOLUTION TO PROBLEM

According to an aspect of the invention, a character input method to be executed by a computer, the character input method includes: acquiring a first image from an imaging device; detecting an object from the first image; specifying a character group corresponding to a first position of the object detected from the first image, based on correspondence information in which each of a plurality of character groups including a plurality of characters is associated with each of a plurality of regions set for the first image; acquiring a second image acquired from the imaging device at a time different from a time at which the first image is acquired; detecting the object from the second image; and designating one character from the specified character group, based on a second position of the object detected from the second image.

ADVANTAGEOUS EFFECTS OF INVENTION

According to an aspect of the present invention, a software keyboard using a camera may be implemented with the use of only a single camera.

BRIEF DESCRIPTION OF DRAWINGS

FIG. 1 is a diagram illustrating an example of the manner of use of an information processing apparatus.
FIG. 2 is a functional block diagram of the information processing apparatus.
FIG. 3 is a diagram illustrating an example of data of setting information.
FIG. 4 is a diagram for explaining the relationship between a QWERTY layout and a character group.
FIG. 5 is an image diagram for explaining the relationship between finger positions and character groups allocated to the finger positions.
FIG. 6 is a diagram illustrating an example of the data structure of a correspondence table.
FIGs. 7A and 7B are diagrams for explaining screen images displayed on a display.
FIGs. 8A, 8B and 8C are image diagrams for explaining processing for designating one character from a character group.
FIG. 9 is a flowchart illustrating a character input process performed by the information processing apparatus according to a first embodiment.
FIG. 10 is a diagram for explaining processing for designating a character in the case of Japanese hiragana input.
FIG. 11 is a flowchart illustrating a character input process performed by an information processing apparatus according to a second embodiment.
FIGs. 12A and 12B are diagrams for explaining changes in the center of gravity of a hand in the case where a finger is slid and in the case where a finger with which a pressing operation is performed is changed.
FIGs. 13A and 13B illustrate results of experiments in which the relationship between a change in the position of the center of gravity of a hand region and a change in a finger position is verified.
FIG. 14 is a flowchart of a character input process performed by an information processing apparatus according to a third embodiment.
FIG. 15A, 15B and 15C include diagrams for explaining the relationship between a user operation and designation of an input character in the third embodiment.
FIG. 16 is an image diagram illustrating different screen displaying.
FIG. 17 is a diagram illustrating an example of the hardware configuration of an information processing apparatus.

DESCRIPTION OF EMBODIMENTS

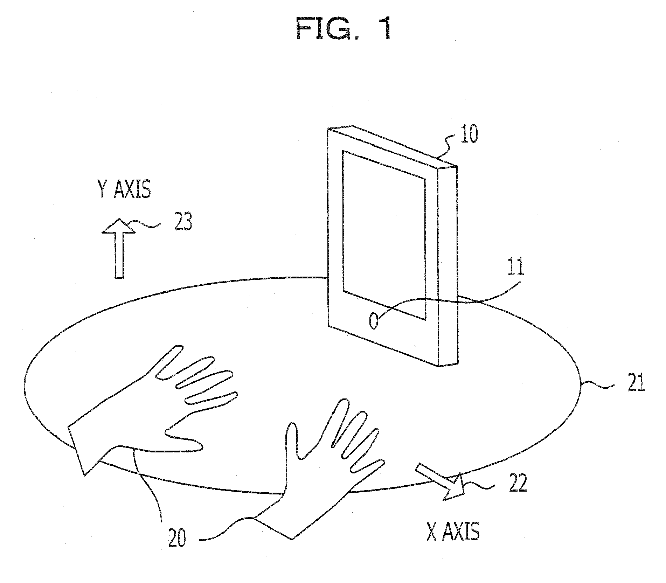

Hereinafter, the embodiments will be explained in detail. The individual embodiments explained below may be combined in an appropriate manner as long as no contradiction arises in the processing details. Hereinafter, the individual embodiments will be explained with reference to the drawings.
First, the manner of use of an information processing apparatus according to an embodiment will be explained. FIG. 1 is a diagram illustrating an example of the manner of use of an information processing apparatus 10.
Here, in the example of FIG. 1, an embodiment using a camera 11 provided in advance on a tablet device, which is an example of an information processing apparatus, is illustrated. However, a software keyboard may be implemented also by allowing an information processing apparatus to acquire images from an external camera.
In the example illustrated in FIG. 1, for example, the information processing apparatus 10 includes the camera 11. The camera 11 may not be arranged at the position illustrated in FIG. 1. The camera 11 may be arranged at a different position.
The information processing apparatus 10 is a computer and is, for example, a smartphone, a slate PC, a tablet device, or the like. The information processing apparatus 10 may not include a physical keyboard.
In the example of FIG. 1, the information processing apparatus 10 is made to stand on a plane 21 with the camera 11 being placed in a lower part of the information processing apparatus 10. At this time, a user places his or her hands 20 within a range that is capable of being photographed by the camera 11, and performs a keyboard operation. For example, the user assumes that a keyboard is arranged on the plane 21, and performs a keyboard operation using the hands 20.

The camera 11 photographs the motion of the hands 20 of the user at specific frame intervals. The information processing apparatus 10 performs inputting of characters in accordance with the positions of fingers of the hands in an image captured by the camera 11.

The camera 11 performs photographing from a position facing the user, and captures an image in which directions of two axes in a real space are recognized. For example, the camera 11 captures an image in which the X axis in the captured image corresponds to an X axis 22 in the real space and the Y axis in the captured image corresponds to a Y axis 23 in the real space. The X axis and the Y axis in the captured image may correspond to other axes in the real space. Furthermore, the camera 11 and the user may not face each other. The camera 11 may be disposed in a direction that is 90 degrees relative to the user.

Here, the user moves the hands 20 in the direction of the Y axis 23 to perform a press operation for a physical keyboard. Furthermore, the user operates the hands 20 in the direction of the X axis 22 to perform an operation for selecting an input character on the physical keyboard. The relationship between operations by the user in the direction of the X axis 22 and the direction of the Y axis 23 and character input will be described later.

(First Embodiment)

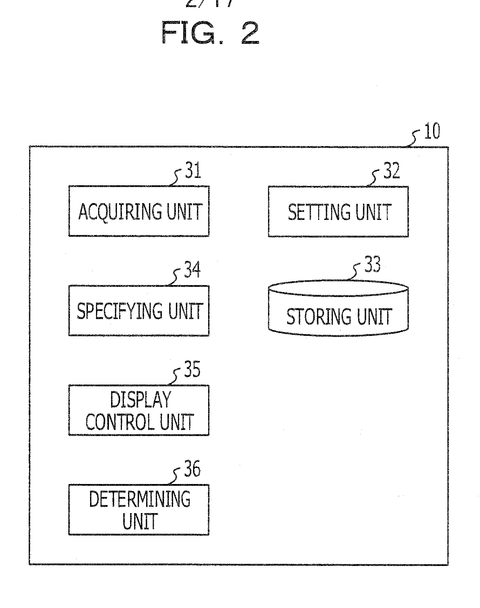

FIG. 2 is a functional block diagram of the information processing apparatus 10. The information processing apparatus 10 includes an acquiring unit 31, a setting unit 32, a storing unit 33, a specifying unit 34, a display control unit 35, and a determining unit 36. Here, the information processing apparatus 10 performs a character input process and an initial setting process. The initial setting process is a process performed prior to the character input process and is a process for performing settings for the subsequent character input process.

In the character input process and the initial setting process, the acquiring unit 31 acquires from the camera 11 images captured at specific frame intervals. In the case of the initial setting process, the acquiring unit 31 outputs the images to the setting unit 32. In the case of the character input process, the acquiring unit 31 outputs the images to the specifying unit 34. The acquiring unit 31 may perform processing for generating a thumbnail image and outputting the thumbnail image as well as outputting of raw data of images.

In the case of the initial setting process, the setting unit 32 extracts a region of an object from an image input from the acquiring unit 31. In this embodiment, the object is a hand or a finger of a user. However, the object may be a pointing stick, a pen, or the like.

For example, the setting unit 32 extracts a left hand region and a right hand region from an image. Then, the setting unit 32 generates, on the basis of the extracted hand regions, setting information for detecting a pressing operation. The setting information is information on the home position of a user.

First, the information processing apparatus 10 allows a user to return to the home position in advance, and the camera 11 photographs the state of the hands before a pressing operation is performed. Then, the setting unit 32 extracts hand regions from the image.

Here, the setting unit 32 converts the RGB values of the acquired image into HSV values representing the color tone, the color saturation, and the brightness. Then, the setting unit 32 extracts regions representing a skin color on the basis of the HSV values. A region representing the skin color is a collection of pixels having HSV values within a specific range. By the above-described processing, the setting unit 32 is capable of extracting hand regions.

Furthermore, the setting unit 32 may remove a palm region from each of the hand regions to extract finger regions. Specifically, the setting unit 32 extracts, from the hand regions, regions having a brightness equal to or greater than a threshold as finger regions. That is, by using the difference between the brightness of a finger region positioned in front of a palm with respect to the camera 11 and the brightness of a palm region, the palm region is removed from the hand region. By removing palm regions, finger regions are extracted.

Then, the setting unit 32 generates setting information on the basis of the height of the hand regions or the height of the individual finger regions at the home position in the image. As the height of a hand region, the smallest value of the Y coordinates of pixels forming the region may be used. Meanwhile, as the height of a finger region, the smallest value of the Y coordinates of pixels forming the region may be sued. Furthermore, as the height of a finger region, the Y coordinate of the center of gravity of the finger region may be used, for example.

Both the X coordinate and the Y coordinate of a reference pixel in an image are set to 0, and the distance from the reference pixel is represented by the values of the X coordinate and the Y coordinate. For example, a pixel in a lower left portion of an image may be set to a reference pixel.

The setting unit 32 generates setting information by adding a specific value to the height of hand regions or the height of individual finger regions at the home position. The setting unit 32 stores the setting information into the storing unit 33. In the character input process described later, the setting information is used for determining whether or not a pressing operation has been performed by a user.

Furthermore, the setting unit 32 may generate first setting information and second setting information for left and right hands. The first setting information is information on a left finger region. The second setting information is information on a right finger region. For example, the value obtained by adding a specific value to the minimum height of the heights of left finger regions is defined as the first setting information. The value obtained by adding a specific value to the minimum height of the heights of right finger regions is defined as the second setting information.

In the initial setting process and the character input process, images of finger regions of all the ten fingers may not be captured. Thus, in order to allow information to be applicable to individual fingers of hands, generating the first setting information and the second setting information is effective. Hereinafter, explanation will be provided on the assumption that the minimum height (Y coordinate) of the heights of individual finger regions is used as setting information.

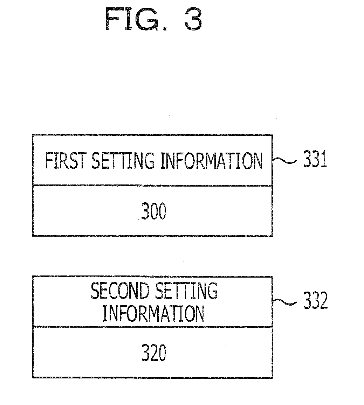

FIG. 3 is a diagram illustrating an example of data of setting information. Setting information 331 and 332 are stored in the storing unit 33. In the example of FIG. 3, the case where an image having about 1600 × 1200 pixels is used illustrated by way of example. In the example of FIG. 3, the first setting information is "300". The first setting information is calculated on the basis of coordinates of individual fingers of the left hand at the home position.

For example, it is assumed that the position of the lowest finger of the left hand at the home position is represented as "Y = 100". At this time, for example, the setting unit 32 adds a specific value "200" to "100", and a first set value is set to "300". That is, in the case where a finger region in an acquired image is lower than the first setting information "Y = 300" by a certain amount of more, it is determined that a pressing operation has been performed. In the example of FIG. 3, the second setting information is "320".

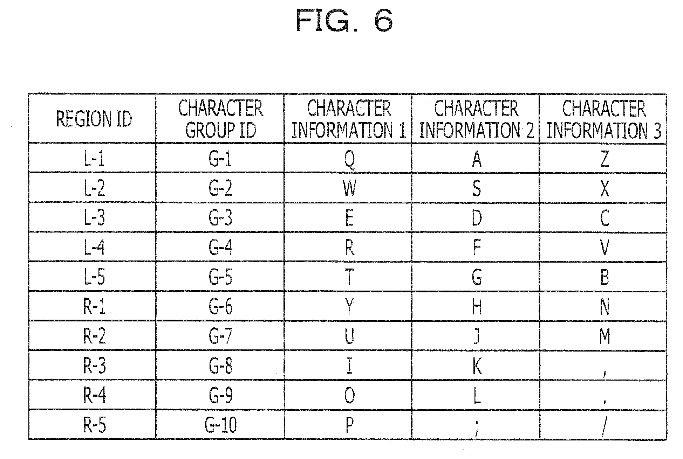

The storing unit 33 in FIG. 2 stores the setting information illustrated in FIG. 3 and correspondence information. A correspondence table 333 illustrated in FIG. 6 is an example of the correspondence information. The correspondence information will be described later.

In the case of the character input process, the specifying unit 34 extracts a hand region from an image input from the acquiring unit 31. Then, the specifying unit 34 detects a pressing operation by the user on the basis of the hand region, and specifies a character group on the basis of the position where the pressing operation has been performed. The character group is a group including a plurality of characters to be input. The details of the character group will be described later.

The specifying unit 34 extracts left and right hand regions from an image. Furthermore, the specifying unit 34 acquires finger regions by performing processing for deleting the palm from a hand region of a captured image. Processing for extracting a hand region and a finger region is similar to that performed by the setting unit 32. Hereinafter, explanation will be provided on the assumption that the specifying unit 34 performs processing using a finger region.

The specifying unit 34 specifies a pixel having the smallest Y-coordinate value of pixels forming each of the finger regions. Then, the specifying unit 34 acquires the X coordinate and the Y coordinate of the specified pixel. The X coordinate and the Y coordinate of a pixel of the center of gravity of each of the finger regions may be calculated.

Then, the specifying unit 34 determines, for individual finger regions, whether or not the acquired Y coordinate is smaller than setting information. In the case where the acquired Y coordinate is smaller than the setting information, the specifying unit 34 determines that a pressing operation has been performed by a user. In the case where the specifying unit 34 calculates the difference between the Y coordinate and the setting information and the difference is smaller than or equal to a threshold, the specifying unit 34 may determine that a pressing operation has been performed by a user,

Then, in the case where it is determined that a pressing operation has been performed, the specifying unit 34 stores a finger position (X coordinate and Y coordinate) acquired earlier. Furthermore, the specifying unit 34 specifies a character group specified by the user, on the basis of the X coordinate of the finger position.

The character group is a group of a plurality of characters. For example, in the case of Japanese hiragana input, characters included in each row are defined as a character group. That is, the information processing apparatus 10 that performs Japanese hiragana input handles ten character groups in total, including a character group including characters "a i u e o", a character group including "ka ki ku ke ko", and the like.

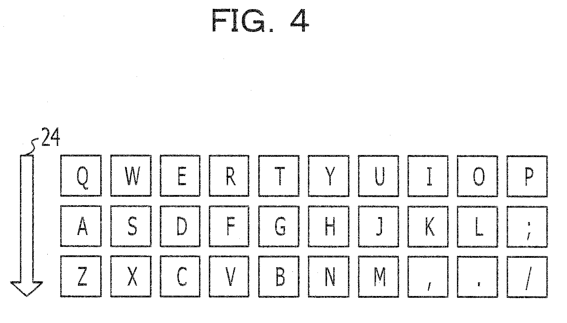

FIG. 4 is a diagram for explaining the relationship between a QWERTY layout and a character group. In the case of character input based on the assumption of a keyboard of a QWERTY layout type, characters arranged in a direction 24 in the QWERTY layout are defined as a character group. The information processing apparatus 10 that performs character input based on the assumption of a keyboard of the QWERTY type handles ten character groups in total, including for example, a character group including "QAZ", a character group including "WSX", and the like.

In this embodiment, the X-axis direction in an image corresponds to a direction that is orthogonal to the direction 24. That is, the direction of the sequence of A, S, D, F, and so on corresponds to the X-axis direction in an image. Since the Y-axis direction in an image is a pressing direction, the Y-axis direction corresponds to the direction from the front side of the plane of the figure toward the back side of the plane of the figure. Thus, instead of determination of the position in the direction 24 from an image, by performing the processing described later, one character of a character group arranged in the direction 24 is specified.

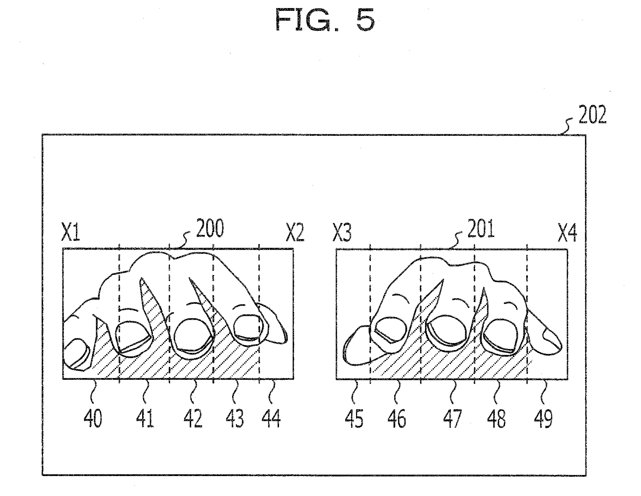

FIG. 5 is an image diagram for explaining the relationship between finger positions and character groups allocated to the finger positions. FIG. 5 illustrates in detail portions corresponding to a left hand region 200 and a right hand region 201 of an image 202. In the example of FIG. 5, on the X-coordinate system in an image, the left hand region 200 is located at a region from X1 to X2, and the right hand region 201 is located at a region from X3 to X4. In FIG. 5, the left hand region and the right hand region are illustrated as rectangles. However, these regions may be regions of hand shapes.

For example, the specifying unit 34 performs division of the individual hand regions in the X-axis direction in accordance with the number of character groups. In FIG. 5, the left hand region 200 is divided into small regions 40 to 44, and the right hand region 201 is divided into small regions 45 to 49. This is because by dividing each of the left and right hand regions into five regions in the case where the number of character groups is ten, one character group may be allocated to each of the small regions.

Specifically, the specifying unit 34 equally divides the region from X1 to X2 forming the left hand region 200 into five small regions. The sizes of the small regions may be different from one another. For example, a region from Xa inclusive to Xb exclusive is defined as the small region 40. In the case where a hand region is divided into small regions, the specifying unit 34 may use information before a palm region is deleted from the hand region or may use the entire finger region as a new hand region. In FIG. 5, a region expressed by oblique lines represents a palm region.

Then, the specifying unit 34 assigns a region ID for each of the small regions 40 to 49 on the basis of rules set in advance. The rules include, for example, "specify whether a small region is included in a left hand region or a right hand region and assign a smaller number for a small region that is positioned more leftward in each of the left and right regions ".

In the example of FIG. 5, since the small region 40 is a small region included in the left hand region 200 and located at the leftmost position, a region ID "L-1" is assigned for the small region 40. Furthermore, the specifying unit 34 assigns a region ID "L-2" for the small region 41, assigns a region ID "L-3" for the small region 42, assigns a region ID "L-4" for the small region 43, assigns a region ID "L-5" for the small region 44, assigns a region ID "R-1" for the small region 45, assigns a region ID "R-2" for the small region 46, assigns a region ID "R-3" for the small region 47, assigns a region ID "R-4" for the small region 48, and assigns a region ID "R-5" for the small region 49.

Then, the specifying unit 34 specifies in which small region the X coordinate of a finger position in the case where a pressing operation is detected is included, and acquires a region ID of the specified small region. Then, the specifying unit 34 refers to the correspondence table and specifies a character group corresponding to the acquired region ID.

FIG. 6 is a diagram illustrating an example of the data structure of the correspondence table 333. The correspondence table 333 is stored in the storing unit 33. The correspondence table is an example of correspondence information. The correspondence information is information for associating a small region with a character group.

In the correspondence table 333, a region ID, a character group ID, and a plurality of pieces of character information are stored in association with one another. The region ID is information identifying a small region. The character group ID is information identifying a character group. The plurality of pieces of character information is information of characters included in a character group corresponding to a character group ID.

For example, FIG. 6 illustrates the correspondence table 333 in character input based on the assumption of a QWERTY layout keyboard. FIG. 6 illustrates that a character group ID "G-1" is assigned for a region represented as a region ID "L-1". Furthermore, FIG. 6 illustrates that the character group ID "G-1" includes character information 1 "Q", character information 2 "A", and character information 3 "Z".

In the case where switching between a plurality of types of input methods may be performed, the storing unit 33 stores a plurality of types of correspondence tables 333. For example, for various methods, such as the QWERTY layout, Japanese hiragana input, and the like, individual correspondence tables 333 are created in advance.

For example, in the case where it is determined that the X coordinate of the finger position of a finger with which a pressing operation has been performed is included in the region 41, the specifying unit 34 acquires the small region ID "L-2", which is assigned for the region 41. Then, the specifying unit 34 acquires from the correspondence table 333 a character group ID "G-2", which corresponds to the small region ID "L-2". The character group ID "G-2" includes character information "W", "S", and "X".

Referring back to FIG. 2, the display control unit 35 controls the displaying of the display. For example, the display control unit 35 may generate a keyboard image and display the keyboard image on the display. However, unlike a touch-panel software keyboard, the keyboard image may not have a size with which a user is able to perform selection as long as the keyboard image is viewable by the user. For example, in the case where a user does not fully understand the QWERTY layout or the like, the user may refer to the keyboard image.

Furthermore, in the case where a pressing operation is detected, the display control unit 35 causes a plurality of characters included in the character group specified by the specifying unit 34 to be displayed on the display.

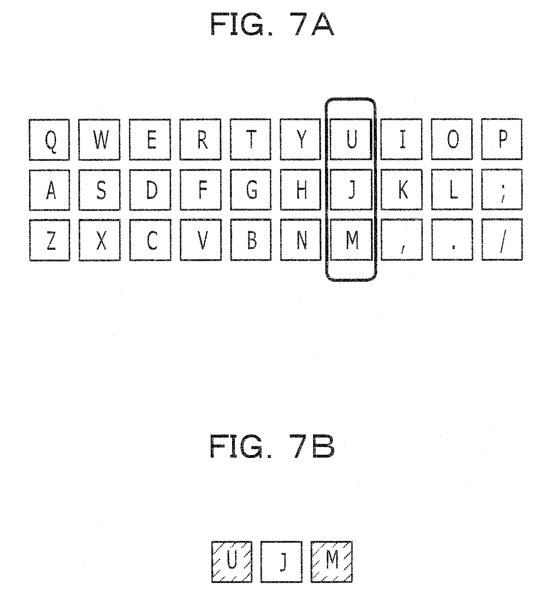

FIG. 7 includes diagrams for explaining screen images displayed on the display. FIG. 7 illustrates examples of screen images in character input using a QWERTY layout keyboard.

In FIGs. 7A and 7B, the direction from the front side of the plane of the figure toward the back side of the plane of the figure corresponds to a pressing direction in the real space. For an image acquired by the camera 11, the direction from the front side of the plane of the figure toward the back side of the plane of the figure corresponds to the Y-axis direction. The direction from the left side of the plane of the figure to the right side of the plane of the figure (the direction of the sequence of (A, S, D, F, G, ⋯) corresponds to the X-axis direction in an image acquired by the camera 11.

FIG, 7A is a keyboard image displayed on the display before a pressing operation is performed. A user performs pressing by moving a finger along the Y axis at a specific position in the X axis in FIG. 1 in the real space. For example, it is assumed that a character group including "UJM" corresponding to the X coordinate of a finger position is specified on the basis of a captured image at the time when a pressing operation is performed.

FIG. 7B is a keyboard image displayed on the display after a pressing operation is performed. For example, in the case where a character group is specified by the specifying unit 34, the display control unit 35 performs displaying as illustrated in FIG. 7B, instead of FIG. 7A. In the example of FIG. 7B, a plurality of pieces of character information included in a specified character group are displayed in such a manner that they are expanded in the X-axis, direction. For example, a keyboard image in which "U", "J", and "M" are arranged in the X-axis direction is displayed.

For example, the display control unit 35 refers to the correspondence table 333, and generates a keyboard image in which the character information 1 to the character information 3 are displayed from left to right. That is, the display control unit 35 displays the character information 1 "U" in the correspondence table 333 at the leftmost position, displays the character information 2 "J" in the correspondence table 333 at a position more rightward than the character information 1 "U", and displays the character information 3 "M" at a position more rightward than the character information 2 "J". The character displayed at left is referred to as a left character, a character displayed at the center is referred to as a central character, and a character displayed at right is referred to as a right character. The position where each of the plurality of pieces of character information is to be displayed is set in advance.

Then, the determining unit 36 in FIG. 2 designates one character of a specified character group as an input character. For example, the determining unit 36 designates one character from a character group on the basis of the position of a finger region in an image captured after a pressing operation is performed. Furthermore, the determining unit 36 designates one character on the basis of the amount of change between the position of a finger region in an image at the time when a pressing operation is detected and the position of the finger region in an image after the pressing operation is performed, and on the basis of the direction of the change.

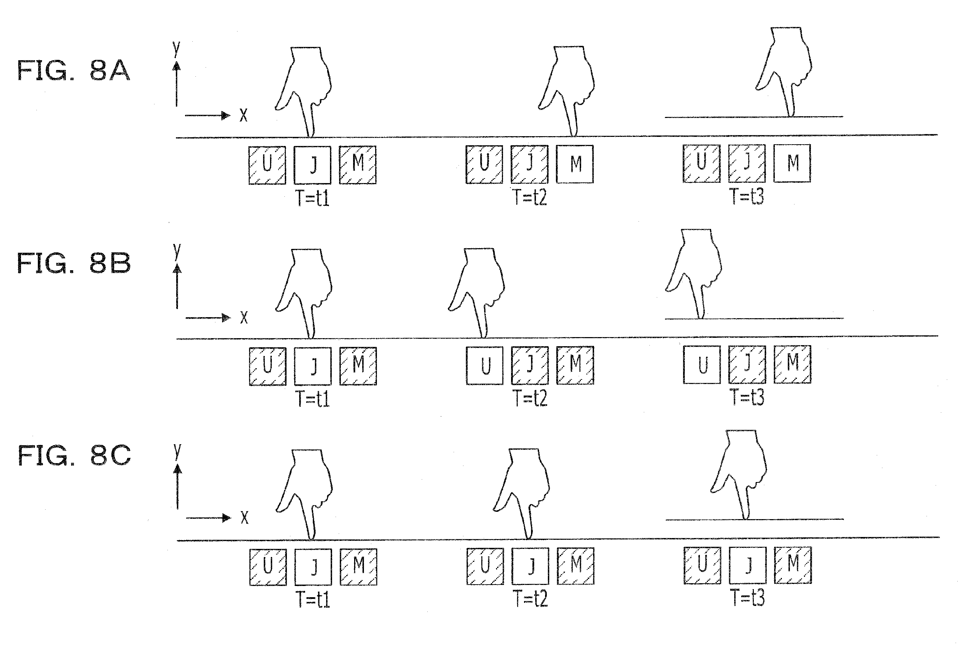

FIG. 8 includes diagrams for explaining processing for designating one character from a character group. The case of a QWERTY layout keyboard will be explained by way of example. Furthermore, the keyboard image is rendered for explanation.

In FIGs. 8A, 8B and 8C, it is assumed that at the time T = t1, a pressing operation is detected and a character group "UJM" is specified. Then, one character of the character group "UJM" is designated on the basis of an image captured at the time T = t2, which is after the time T = t1.

FIG. 8A illustrates an example in which with respect to the finger position at the time T = t1, movement in the positive direction of the X axis is detected at the time T = t2. As is clear from FIG. 8A, a user has performed an operation for sliding the finger to the right after performing the pressing operation.

The determining unit 36 designates "M" from the character group "UJM" on the basis of the X coordinate of the finger position at the time T = t2. Furthermore, in the case where the difference between the X coordinate of the finger position at the time T = t1 and the X coordinate of the finger position at the time T = t2 is equal to or more than a specific value in the positive direction of the X axis, the determining unit 36 may recognize that the finger has been slid to the right.

Here, in the case where it is detected that the finger is moved to the Y-axis direction by a certain distance or more at the time T = t3, which is after the time T = t2, the determining unit 36 designates "M", which is designated in advance, as an input character. Furthermore, in the case where the finger is positioned equal to or higher than setting information, the character "M", which is designated in advance, may be designated as an input character.

FIG. 8B illustrates an example in which with respect to the finger position at the time T = t1, movement in the negative direction of the X axis is detected at the time T = t2. For example, the determining unit 36 designates "U" from the character group "UJM" on the basis of the X coordinate of the finger position at the time T = t2. Furthermore, for example, in the case where the difference between the X coordinate of the finger position at the time T = t1 and the X coordinate of the finger position at the time T = t2 is equal to or greater than a specific value in the negative direction of the X axis, the determining unit 36 may recognize that the finger has been slid to the left.

Here, in the case where it is detected that the finger is moved to the Y-axis direction by a certain distance or more at the time T = t3, which is after the time T =t2, the determining unit 36 designates "U", which is designated in advance, as an input character.

FIG. 8C illustrates an example of the case where with respect to the finger position at the time T = t1, movement in the X-axis direction is not performed or movement in the X-axis direction is small at the time T = t2. For example, the determining unit 36 designates "J" from the character group "UJM" on the basis of the X coordinate of the finger position at the time T = t2. Furthermore, for example, since the difference between the X coordinate of the finger position at the time T = t1 and the X coordinate of the finger position at the time T = t2 is smaller than a threshold, the determining unit 36 may recognize that sliding has not been performed.

Here, in the case where it is detected that the finger is moved in the Y-axis direction by a certain distance or more at the time T =t3, which is after the time T = t2, the determining unit 36 designates "J", which is designated in advance, as an input character.

The display control unit 35 may display a designated character in accordance with a change in the position of a finger region in an image in such a manner that a user is able to identify the designated character. For example, as illustrated in FIG. 8, the display control unit 35 displays a key image of a designated character in a way different from the way in which key images of the other characters are displayed.

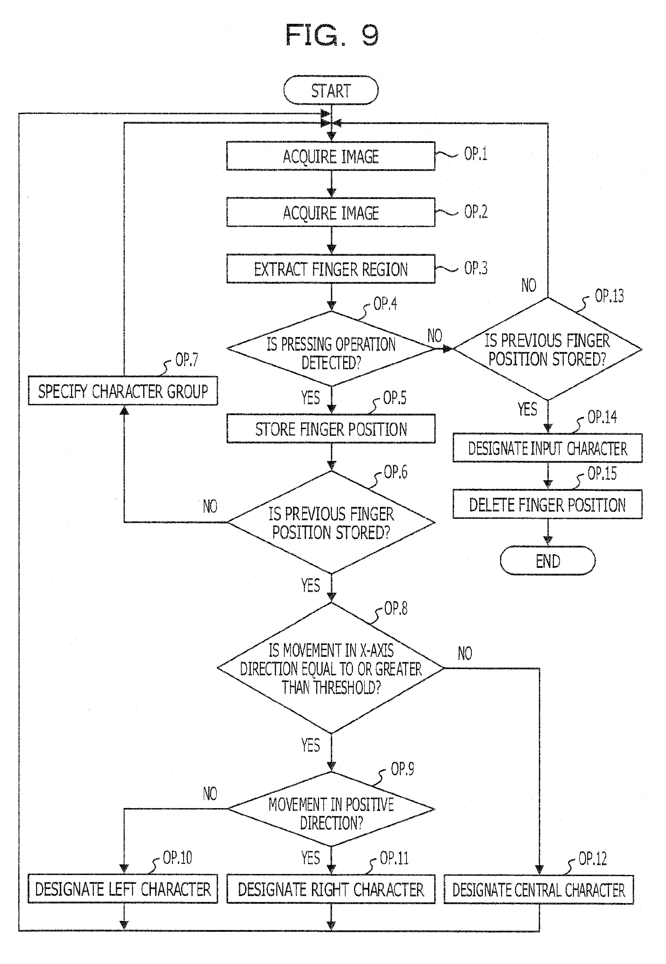

FIG. 9 is a flowchart illustrating a character input process performed by the information processing apparatus according to the first embodiment. The acquiring unit 31 acquires, using the camera 11, an image (OP. 1). Although explanation will be given with reference to FIG. 9 on the assumption that a series of processing operations is performed every time the acquiring unit 31 acquires an image, the series of processing operations may be performed once when a plurality of images are acquired.

The specifying unit 34 extracts hand regions from an image (OP. 2). Then, the specifying unit 34 further extracts finger regions from the hand regions (OP. 3). Then, the specifying unit 34 calculates the finger positions (X coordinates and Y coordinates) of the individual finger regions.

The specifying unit 34 detects a pressing operation by a user on the basis of setting information and the finger positions of the individual finger regions (OP. 4). In the case where the Y coordinate of the finger position of a finger region is smaller than or equal to the setting information, the specifying unit 34 determines that a pressing operation has been performed.

In the case where a pressing operation is detected (Yes in OP. 4), the specifying unit 34 stores the finger position of a finger with which a pressing operation has been performed into the storing unit 33 (OP. 5). The specifying unit 34 refers to the storing unit 33 and determines whether or not the previous finger position is stored (OP. 6). In the case where the image being processed is the image in which a pressing operation is detected for the first time, the previous finger position does not exist in the storing unit 33. Meanwhile, in the case where the image being processed is not the image in which a pressing operation is detected for the first time, the previous finger position exists in the storing unit 33.

In the case where the previous finger position is not stored (No in OP. 6), the specifying unit 34 specifies a character group on the basis of the X coordinate of the finger position (OP. 7).

That is, the specifying unit 34 divides a hand region into a plurality of small regions and assigns region IDs for the individual small regions. Then, the specifying unit 34 refers to the correspondence table and specifies a character group ID assigned for a small region on the basis of a region ID assigned for the small region in which the finger position is included.

In this embodiment, in the processing for specifying a character group, a hand region is divided into a plurality of small regions and region IDs are assigned for the individual small regions. The specifying unit 34 is capable of specifying a character group even when the range of a hand region in an image is shifted by the progress of the input operation. Meanwhile, for example, the setting unit 32 may determine the range of individual small regions at the time of the initial setting process. Then, the setting unit 32 may store a region ID of a small region in the correspondence table in association with information on the determined range. The load of processing by the specifying unit 34 for specifying a character group is reduced.

In the case where the previous finger position is stored (Yes in OP. 6), the determining unit 36 determines whether the moved distance of the finger in the X-axis direction is equal to or greater than a threshold (OP. 8). That is, it is determined whether or not the difference between the X coordinate of the finger position in an image being processed and the X coordinate of the previous finger position is equal to or greater than the threshold. Since the difference is obtained as a positive or negative value in OP. 8, the determining unit 36 compares the absolute value of the difference with the threshold.

In the case where a plurality of previous finger positions are stored, the determining unit 36 may calculate the difference between the finger position in the immediately previously processed image and the threshold or the difference between the oldest finger position and the threshold. The oldest finger position is a finger position used when a character group is specified.

In the case where the moved distance is smaller than the threshold (No in OP. 8), the determining unit 36 refers to the correspondence table 333 and designates a character set as a central character of the specified character group (OP. 12). In the example of FIG. 9, the character information 2 in the correspondence table is defined as a central character of a character group. For example, in the QWERTY layout, a middle section "A" of a character group" QAZ" is defined as a central character. Furthermore, in the case of Japanese hiragana input, "a" of a character group "a i u e o" is defined as a central character.

Meanwhile, in the case where the moved distance is equal to or greater than the threshold (Yes in OP. 8), the determining unit 36 determines whether the movement is a movement in the positive direction (OP. 9). Specifically, the determining unit 36 determines whether the difference between the X coordinate of the finger position in the image being processed and the X coordinate of the previous finger position is a positive value. In the case of a movement in the positive direction (Yes in OP. 9), the determining unit 36 designates a character set as a right character of the specific character group (OP. 11). In the example of FIG. 9, the character 3 in the correspondence table is defined as a right character of a character group.

In the case where the movement is not in the positive direction (No in OP. 9), the determining unit 36 designates a character set as a left character of the specified character group (OP. 10). In the example of FIG. 9, the character 1 in the correspondence table is defined as a left character of a character group. After a character is designated in any one of OP. 10 to OP. 12, the information processing apparatus returns to OP. 1.

Meanwhile, in the case where a pressing operation is not detected in OP. 4 (No in OP. 4), the determining unit 36 determines whether or not the previous finger position is stored (OP. 13). In the case where the previous finger position is not stored (No in OP. 13), the information processing apparatus returns to OP. 1. That is, the state in which a pressing operation is not detected and the previous finger position is not stored indicates that a user has not performed a character input operation.

In the case where the previous finger position is stored (Yes in OP. 13), the determining unit 36 designates, for an image previous to the image being processed, a character designated in any one of OP. 10 to OP. 12 as an input character (OP. 14). That is, the state in which a pressing operation is not detected and the previous finger position is stored indicates that a pressing operation by a user is detected in an image acquired prior to the image being processed. Thus, for the image being processed, the user has cancelled the pressing operation and performed an operation for designating a character.

Next, the determining unit 36 deletes the stored finger position (OP. 15). By OP. 15, finger positions stored into the information processing apparatus by the user during the period from the pressing operation to the designating operation are deleted. Then, the information processing apparatus terminates the character input process.

Apart from the process illustrated in FIG. 9, the display control unit 35 may perform display control. For example, in the case where a character group is specified in OP. 7, the display control unit 35 performs the displaying as illustrated in FIG. 7B. Furthermore, in the case where a character is designated in any one of OP. 10 to OP. 12, the display control unit 35 displays the designated character of the specified character group in such a manner the designated character is distinguishable from the other characters.

Furthermore, in the case where a character group includes four or more characters, one of the four or more characters may be determined on the basis of a moved distance in each of the left and right direction.

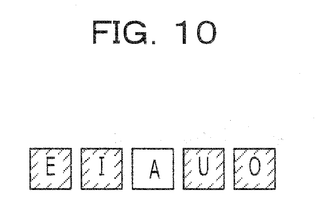

FIG. 10 is a diagram for explaining processing for designating a character in the case of Japanese hiragana input. In the example of FIG. 10, a character group includes five hiragana characters. For example, for a character group "a i u e o", "e", "i", "a", "u"', and "o" are displayed from left to right. That is, the central character is "a", a first left character is "e", a second left character is "i", a first right character is "u", and a second right character is "o".

In the case where it is determined in OP. 8 that the movement is a movement in the positive direction, the determining unit 36 further determines whether or not the moved distance is greater than a different threshold. In the case where the moved distance is smaller than the different threshold, the determining unit 36 designates "u", which is the first right character of the character group, as the character specified by the user. Meanwhile, in the case where the moved distance is equal to or greater than the different threshold, the determining unit 36 designates "o", which is the second right character of the character group, as the character specified by the user.

Furthermore, in the case where it is determined in OP. 8 that the movement is not a movement in the positive direction, similarly, the determining unit 36 designates, by determining whether the moved distance is greater than the different threshold, the first left character or the second left character as the character specified by the user.

By the processing described above, a software keyboard is implemented using a single camera. By allocating two axes in an image to a direction of a pressing operation by a user and a direction in which a character group is arranged, a character group for which pressing is performed by the user is specified. Furthermore, by expanding characters included in a character group in the direction in which the character group is arranged, the user is able to specify one character of the character group.

(Second Embodiment)

In a second embodiment, by identifying whether a change in a finger position is a change by sliding or a change by using a different finger, more accurate character input process is achieved.

In an image, a pressing operation is detected, and a character of a character group is designated. Originally, in the case where the pressing operation by the user is cancelled in the subsequent image, the designated character is designated. That is, originally, when a pressing operation is not detected for the subsequent image in OP. 4, one character is designated.

However, in the case where a pressing operation is detected on the basis of the comparison between information on a hand region or a finger region extracted from an image and setting information, when the time from the cancellation of the pressing operation to the next pressing operation is short or when a pressing operation by a different finger is performed before the pressing operation by the finger is cancelled, cancellation of the pressing operation may not be detected. In such cases, a character input by the user is not specified accurately. An information processing apparatus 10 according to the second embodiment is capable of character input by a software keyboard using a single camera and more accurate character input.

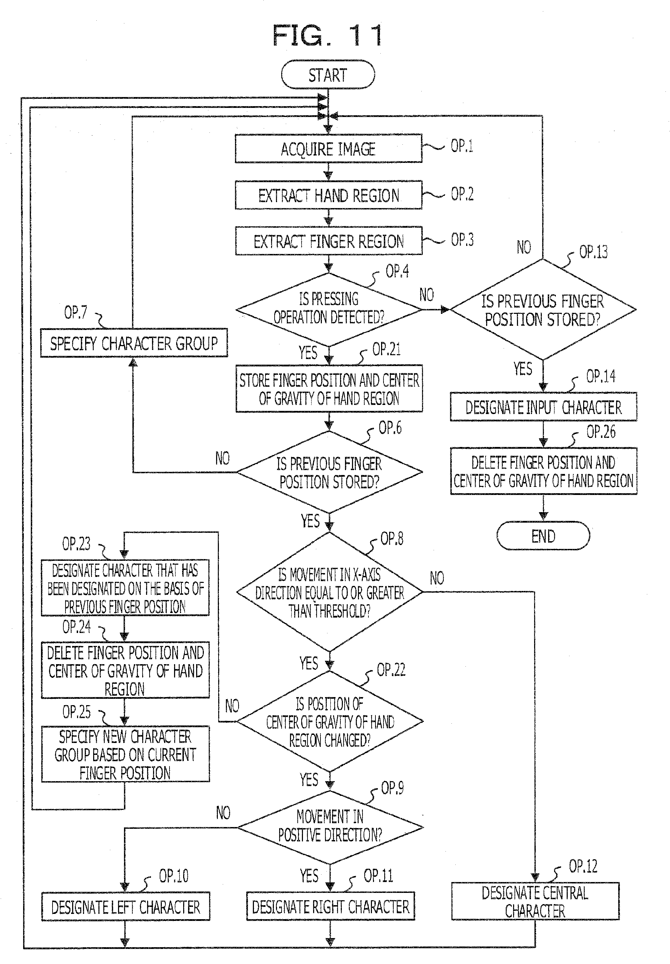

FIG. 11 is a flowchart illustrating a character input process performed by the information processing apparatus according to the second embodiment. Processing operations similar to those in the processing flow of the first embodiment are referred to with similar numbers and the explanation of those similar processing operations will be omitted. The information processing apparatus according to the second embodiment is represented by a functional block diagram similar to that in the first embodiment.

In the case where a pressing operation is detected in OP. 4 (Yes in OP. 4), the specifying unit 34 calculates the finger position and the center of gravity of the hand region extracted in OP. 2 and stores the finger position and the center of gravity of the hand region into the storing unit 33 (OP. 21). The center of gravity of the hand region is calculated from Math. 1 to Math. 4 provided below.

F (x,y) represents a function representing a hand region, $m_{0,0}$ represents the area of the entire hand region, $m_{1,0}$ and $m_{0,1}$ each represent a first moment. The position g (x,y) of the center of gravity of a hand region is acquired by dividing a first moment by the area of the entire hand region.

$$m_{0,0} = \sum_x \sum_y F(x,y)$$

[Math. 1]

$$m_{1,0} = \sum_x \sum_y xF(x,y)$$

[Math. 2]

$$m_{0,1} = \sum_x \sum_y yF(x,y)$$

[Math. 3]

[Math. 4] $$g(x,y) = (m_{1,0} / m_{0,0}, m_{0,1} / m_{0,0})$$

Furthermore, in the case where it is determined in OP. 8 that the moved distance in the X-axis direction for the finger position is equal to or greater than a threshold (Yes in OP. 8), the determining unit 36 performs a processing operation OP. 22.

The determining unit 36 determines whether the position of the center of gravity of the hand region in the image being processed is changed from the position of the center of gravity of the hand region in the previous image (OP. 22). For example, in the case where the difference between the X coordinate of the center of gravity of the hand region in the image being processed and the X coordinate of the center of gravity of the hand region in the previous image is equal to or greater than the threshold, the determining unit 36 determines that the position of the center of gravity is changed.

On the basis of Math. 5, the difference between the X coordinate of the center of gravity of the hand region in the image being processed and the X coordinate of the center of gravity of the hand region in the previous image is calculated. In Math. 5, for example, in the case where the center of gravity in the image immediately previously processed is compared with the center of gravity in the image currently being processed, n represents 1. Here, t represents a frame number of an image captured by a camera.

$$[\text{Math. 5}] \quad \triangle g(x) = g(x, t - n) - g(x, t)$$

In the case where the center of gravity of the hand region is changed (Yes in OP. 22), the determining unit 36 performs the processing operation OP. 9 and the subsequent processing operations. This is because the change in the position of the center of gravity of the hand region may be regarded as the result of a sliding operation performed by the user.

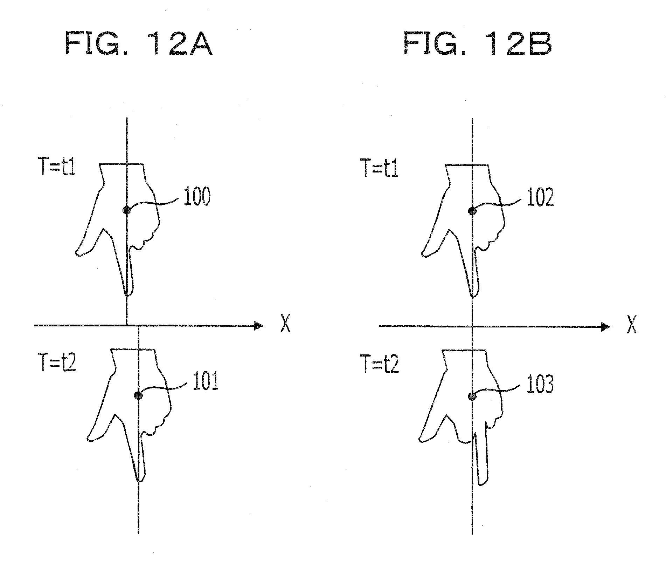

FIG. 12 includes diagrams for explaining a change in the center of gravity of a hand when a finger is slid and a change in the center of gravity of the hand when a finger with which a pressing operation is performed is changed. FIG. 12A is a diagram illustrating the case where a sliding operation is performed. FIG. 12A illustrates an image of a hand region at the time T = t1 and an image of the hand region at the time T = t2 after a sliding operation is performed. In the hand region at the time T =t1, the center of gravity is represented by a position 100. In the hand region at the time T = t2, the center of gravity is represented by a position 101. As is clear from FIG. 12A, the position of the center of gravity of the hand region is changed between before and after the sliding operation is performed by the user.

FIG. 12B includes diagrams illustrating the case where a finger with which a pressing operation is performed is changed. FIG. 12B illustrates an image of a hand region at the time T = t1 and an image of the hand region at the time T = t2 after a finger is changed. In the hand region at the time T = t1, the center of gravity is represented by a position 102. In the hand region at the time T = t2, the center of gravity is represented by a position 103. As described above, as is clear from FIG. 12B, in the case where a finger is changed, the position of the center of the gravity of the hand region is less changed than the case where a sliding operation is performed.

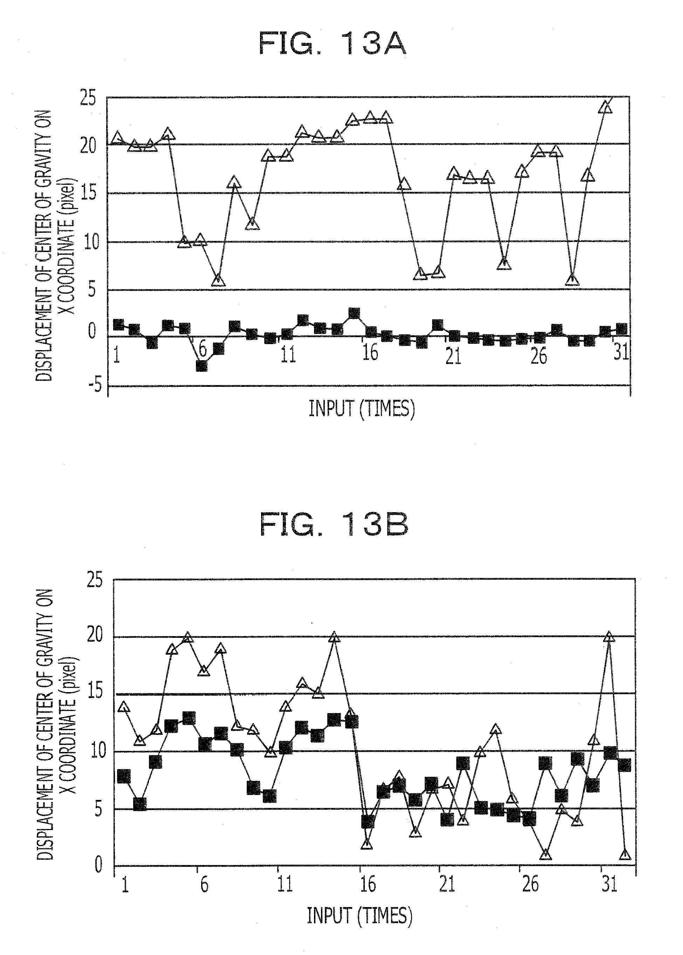

FIG. 13 illustrates the results of experiments in which the relationship between a change in the position of the center of gravity of a hand region and a change in the position of a finger is verified. In FIGs. 13A and 13B, the vertical axis represents the displacement of the center of gravity of a hand region and the horizontal axis represents the number of operations performed in the experiment.

FIG. 13A is a diagram illustrating the comparison between the displacement of the center of gravity of a hand region on the X coordinate and the displacement of a finger position on the X coordinate in the case where a switching to a pressing operation using the middle finger is performed after a pressing operation using the index finger is performed. Values expressed by triangles represent displacement of a finger position on the X coordinate. Values expressed by squares represent displacement of the center of gravity of a hand region on the X coordinate. As described above, as is clear from FIG. 13A, in the case where switching to a pressing instruction using the middle finger is performed after a pressing instruction using the index finger is performed, the displacement of the center of gravity of the hand region is smaller than the displacement of the finger position.

Meanwhile, FIG. 13B is a diagram illustrating the comparison between the displacement of the center of gravity of a hand region on the X coordinate and the displacement of a finger position on the X coordinate in the case where a sliding operation is performed. Values expressed by triangles represent displacement of a finger position on the X coordinate. Values expressed by squares represent displacement of the center of gravity of a hand region on the X coordinate. As described above, as is clear from FIG. 13B, in the case where a sliding operation is performed, the displacement of the center of gravity of the hand region is large, similar to the displacement of the finger position.

In accordance with the comparison between values expressed by squares in FIG. 13A and values expressed by squares in FIG. 13B, a determination as to whether a finger with which a pressing operation is performed is changed or a sliding operation is performed may be made on the basis of the displacement of the center of gravity of the hand region.

Thus, in the case where it is determined in OP. 22 that the X coordinate of the center of gravity of the hand region is changed, it is determined that a sliding operation has been performed. The determining unit 36 designates a character corresponding to a sliding direction from a character group, as in the first embodiment (OP. 10 to OP. 12). Here, the previous hand region is a hand region in the image that was processed immediately before the image currently being processed.

Meanwhile, in the case where the X coordinate of the center of gravity of the hand region is not changed in OP. 22 although the finger position is moved by the amount equal to or greater than the threshold in OP. 8 (No in OP. 22), it may be determined that a finger with which a pressing operation is performed has been changed.

Thus, in the case where it is not determined in OP. 22 that the X coordinate of the center of gravity of the hand region is changed (No in OP. 22), the determining unit 36 designates the character designated in the previously processed image as an input character (OP. 23). Next, the determining unit 36 deletes, for the previously processed image, stored finger positions and center of gravity of the hand region (OP. 24). Here, the finger position and the center of gravity of the hand region stored in OP. 21 for the image currently being processed are not deleted.

Next, the specifying unit 34 specifies a new character group on the basis of a finger position in an image currently being processed (OP. 25). A method for specifying a character group is similar to that in OP. 7. Then, the process returns to the processing operation OP. 1.

Meanwhile, in the case where pressing processing is not detected in OP. 4 and the previous finger position is stored (Yes in OP. 13), the determining unit 36 designates an input character, as in the first embodiment (OP. 14). Then, the determining unit 36 deletes all the finger positions and the center of gravity of the hand region (OP. 26).

By the processing described above, character input using a single camera is achieved without using a physical keyboard. Furthermore, by determining whether a change in a finger position is caused by sliding or by changing a finger with which a pressing operation is performed, more accurate character input process is achieved.

(Third Embodiment)

In the first and second embodiments, the information processing apparatus designates one character from a character group when a user slides a finger while keeping a pressing operation. In a third embodiment, even in the case where a user performs a sliding operation while canceling the state where the pressing is performed, an information processing apparatus is capable of designating one character from a character group. Specifically, one character is designated from a character group in accordance with the direction in which a finger moves when the pressing is cancelled. For example, a user performs an operation for lifting a finger to the upper left, directly above, or upper right.

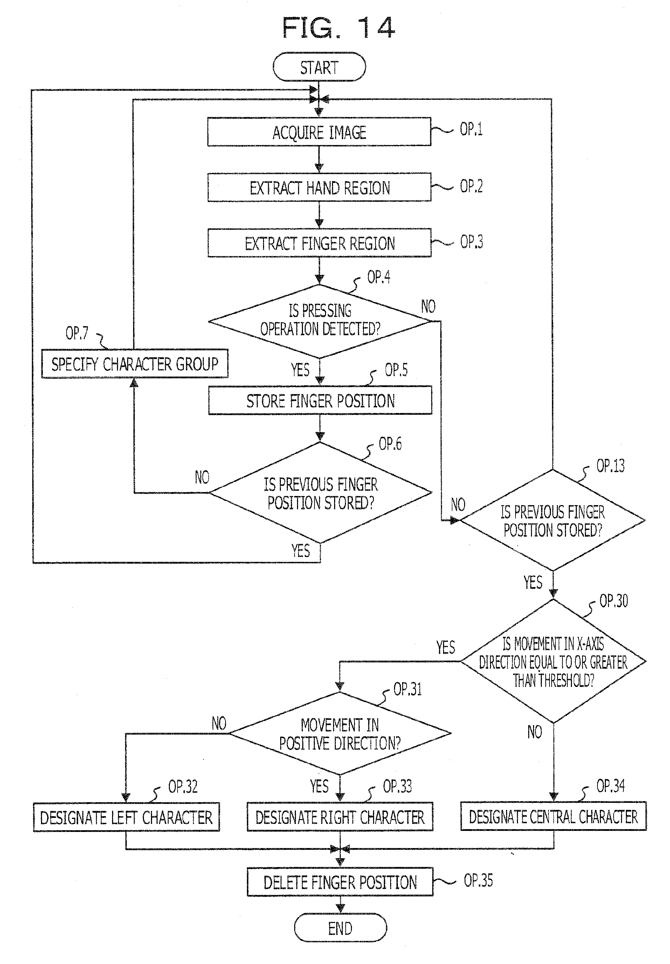

FIG. 14 is a flowchart illustrating a character input process according to the third embodiment. Processing operations similar to those in the processing flow of the first embodiment and the second embodiment will be referred to with similar numbers and the explanation of those similar processing operations will be omitted. The information processing apparatus according to the third embodiment is represented by a functional block diagram similar to that in the first and second embodiments.

The specifying unit 34 refers to the storing unit 33 and determines whether or not the previous finger position is stored (OP. 6). In the case where the previous finger position is not stored (No in OP. 6), the specifying unit 34 specifies a character group on the basis of the X coordinate of the finger position, as in the first embodiment (OP. 7).

Meanwhile, in the case where the previous finger position is stored (Yes in OP. 6), the process returns to the processing operation OP. 1. This is because the information processing apparatus 10 according the third embodiment determines that any character of a specified character group is not selected as long as a pressing operation by a user continues to be performed.

In the case where a pressing operation is not detected (No in OP. 4), the determining unit 36 determines whether or not the previous finger position is stored (OP. 13). In the case where the previous finger position is not stored (No in OP, 13), the information processing apparatus returns to the processing operation OP. 1. That is, in the case where a pressing operation is not detected and the previous finger position is not stored, it is determined that the user has not performed any character input operation.

Meanwhile, in the case where the previous finger position is stored (Yes in OP. 13), the determining unit 36 determines whether the moved distance of a finger in the X-axis direction is equal to or greater than a threshold (OP. 30). That is, it is determined whether the difference between the X coordinate of the finger position in the image being processed and the X coordinate of the previous finger position is equal to or greater than the threshold. Since the difference is obtained as a positive or negative value, the determining unit 36 compares the absolute value of the difference with the threshold.

In the case where the moved distance is smaller than the threshold (No in OP. 30), the determining unit 36 refers to the correspondence table 333 and designates a character set as a central character of the specified character group as an input character (OP. 34).

Meanwhile, in the case where the moved distance is equal to or greater than the threshold (Yes in OP. 30), the determining unit 36 determines whether the movement is a movement in the positive direction (OP. 31). Specifically, the determining unit 36 determines whether the difference between the X coordinate of the finger position in the image being processed and the X coordinate of the previous finger position is a positive value.

In the case where the movement is a movement in the positive direction (Yes in OP. 31), the determining unit 36 designates a character set as a right character of the specified character group as an input character (OP. 33). In the case where the movement is not a movement in the positive direction (No in OP. 31), the determining unit 36 designates a character set as a left character of the specified character group as an input character (OP. 32). Next, the determining unit 36 deletes the stored finger position (OP. 35). Then, the information processing apparatus terminates the character input process.

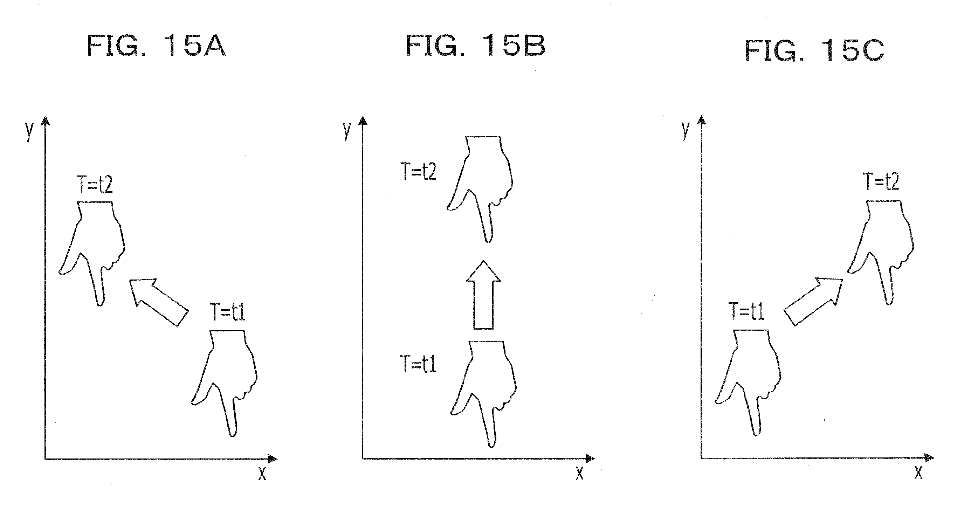

FIG. 15A, 15B and 15C include diagrams for explaining the relationship between a user operation and designation of an input character in the third embodiment. FIGs. 15A to 15B illustrate that the finger position at the time T = t1 is moved to the finger position at the time T = t2. The Y axis of the plane of the figure corresponds to the Y axis 23 in the real space, and a user performs a pressing operation in the Y-axis direction. Furthermore, the X-axis direction of the plane of the figure corresponds to the X axis 22 in the real space, and a user performs an operation for specifying a character group and an operation for selecting one character from the character group in the X-axis direction.

FIG. 15A illustrates the state in which a user lifts a finger in the negative X-axis direction relative to the position at which the user has performed a pressing operation. That is, by changing the finger position in the positive Y-axis direction and in the negative X-axis direction, the pressure sensor 36 is capable detecting cancellation of the pressing operation and designating a left character of a specified character group as an input character.

FIG. 15B illustrates the state in which a user lifts a finger without moving in the X-axis direction relative to the position at which the user has performed the pressing operation. That is, by changing the finger position in the positive Y-axis direction, the determining unit 36 is capable of detecting cancelation of the pressing operation and designating a central character of a specified character group as an input character.

FIG. 15C illustrates the state in which a user lifts a finger in the positive X-axis direction relative to the position at which the user has performed the pressing operation. That is, by changing the finger position in the positive Y-axis direction and in the positive X-axis direction, the determining unit 36 is capable of detecting cancellation of the pressing operation and designating a right character of a specified character group as an input character.

By the processing described above, character input using a single camera is achieved without using a physical keyboard. Furthermore, since a user is able to designate an input character while cancelling pressing, character input is performed with a smaller number of operations.

(Variations)

The foregoing embodiments may be varied as described below.

For example, a character group may be allocated to each finger, unlike the embodiments in which a character group is allocated to each small region. That is, at the time of initial setting, the setting unit 32 detects each finger and stores the feature quantity of the finger. The feature quantity represents a function representing the shape of the finger and information on the color of skin, nails, and the like. Then, the setting unit 32 generates a correspondence table in which a character group is allocated to each of fingers of the left and right hands.

Next, in the character input process, in the case where a pressing operation is detected, the specifying unit 34 specifies a finger with which the pressing operation has been performed, on the basis of the feature quantity of the finger with which the pressing operation has been performed. Then, the specifying unit 34 refers to the correspondence table, and specifies a character group allocated in advance to the finger with which the pressing operation has been performed. The processing for designating one character from a character group is performed as in the first to third embodiments.

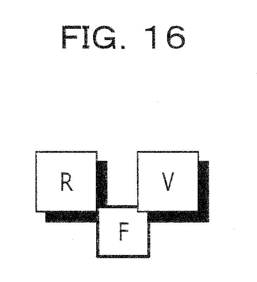

Furthermore, as another variation, the display control unit 35 may perform another type of displaying when a character group specified by the specifying unit 34 is displayed. For example, in the case where a character is designated in accordance with an operation for lifting a finger by a user as in the third embodiment, for example, three-dimensional displaying may be performed as illustrated in FIG. 16.

FIG. 16 is an image diagram illustrating another type of screen displaying. In FIG. 16, the displaying is performed as if a right character "V" and a left character "R" have a height in the direction from the back side of the plane of the figure to the front side of the plane of the figure, relative to a central character "F". Displaying more linked with an operation for lifting a finger by a user is achieved.

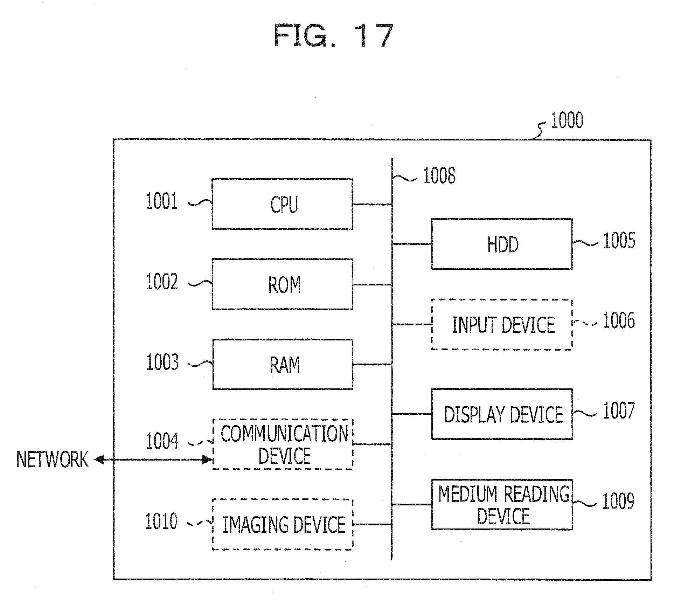

FIG. 17 is a diagram illustrating an example of the hardware configuration of the information processing apparatus 10. A computer 1000 performs the above-described character input process and functions as the information processing apparatus 10. The computer 1000 includes a central processing unit (CPU) 1001, a read only memory (ROM) 1002, a random access memory (RAM) 10003, a hard disk drive (HDD) 1005, a display device 1007, and a medium reading device 1009. Individual units are connected to one another via a bus 1008. The individual units may perform transmission and reception of data between each other under the control of the CPU 1001.

A character input program in which the character input process represented by the flowchart in each of the embodiments is described is recorded on a computer-readable recording medium. The computer-readable recording medium may be a magnetic recording device, an optical disk, a magneto-optical recording medium, a semiconductor memory, or the like. The magnetic recording device may be an HDD, a flexible disk (FD), a magnetic tape (MT), or the like.

The optical disk may be a digital versatile disc (DVD), a DVD-RAM, a compact disc-read only memory (CD-ROM), a CD-recordable (CD-R)/rewritable (RW), or the like. The magneto-optical recording medium may be a magneto-optical disk (MO) or the like. In the case where the program is circulated, for example, a portable recording medium such as a DVD, a CD-ROM, or the like in which the program is recorded may be sold.

Then, the computer 1000 that executes a character input program reads the program, for example, with the medium reading device 1009, from a recording medium on which the character input program is recorded. In accordance with the read program, the computer 1000 functions as the information processing apparatus 10. The CPU 1001 stores the read program into the HDD 1005, the ROM 1002, or the RAM 1003.

The CPU 1001 is a central processing unit that performs operation control of the entire information processing apparatus. In the HDD 1005, as a program for causing a computer to perform functions similar to those of the information processing apparatus 10 described in each of the foregoing embodiments, a program for causing a computer to execute individual processes is stored.

Then, by reading a control program from the HDD 1005 and executing the read control program, the CPU 1001 functions as the acquiring unit 31, the setting unit 32, the specifying unit 34, the display control unit 35, and the determining unit 36 illustrated in FIG. 2. Furthermore, the control program may be stored in the ROM 1002 or the RAM 1003 that is accessible by the CPU 1001.

Furthermore, the HDD 1005 functions as the storing unit illustrated in FIG. 2 under the control of the CPU 1001. That is, the information illustrated in FIGs. 3 and 6 is stored in the HDD 1005. Similar to the program, information corresponding to a data table in the storing unit may be stored in the ROM 1002 or the RAM 1003 that is accessible by the CPU 1001. That is, data in the storing unit is also stored in a storing device such as the HDD 1005, the ROM 1002, the RAM 103, or the like. Furthermore, information temporarily generated in the course of a process is also stored in the RAM 1003. The display device 1007 displays various screens.

Furthermore, the computer 1000 functioning as the information processing apparatus 10 may further include a communication device 1004, an input device 1006, and an imaging device 1010. The communication device 1004 receives a signal from a different apparatus via a network and transmits the contents of the signal to the CPU 1001. The communication device 1004 also transmits a signal to the different apparatus via the network in accordance with an instruction from the CPU 1001.

The input device 1006 receives input of information from a user. The input device 1006 may be a physical keyboard. In the computer 1000, character input is implemented by the character input process disclosed in the foregoing embodiments. A touch panel may be used as the input device 1006.

For example, in accordance with an instruction from a user, character input using a touch panel may be invalidated, and the information processing apparatus 10 may perform the character input process disclosed in the foregoing embodiments. The computer 1000 allows a user to select between character input using a touch panel and the character input process disclosed in the foregoing embodiments.

The imaging device 1010 performs photographing at specific frame intervals and outputs captured images to the CPU 1001. The imaging device 1010 includes, for example, a charge coupled device (CCD) sensor or a complementary meta! oxide semiconductor (CMOS) sensor, and photographs, for example, the hands of a user.

REFERENCE SIGNS LIST

| 10 | information processing apparatus |
| 11 | camera |
| 31 | acquiring unit |
| 32 | setting unit |
| 33 | storing unit |
| 34 | specifying unit |
| 35 | display control unit |
| 36 | determining unit |
| 1000 | computer |
| 1001 | CPU |
| 1002 | ROM |
| 1003 | RAM |
| 1004 | communication device |
| 1005 | HDD |
| 1006 | input device |

1007 display device

1008 bus

1009 medium reading device

1010 imaging device

**Claims**

1. A character input method to be executed by a computer, the character input method comprising:

   acquiring a first image from an imaging device;
   detecting an object from the first image;
   specifying a character group corresponding to a first position of the object detected from the first image, based on correspondence information in which each of a plurality of character groups including a plurality of characters is associated with each of a plurality of regions set for the first image;
   acquiring a second image acquired from the imaging device at a time different from a time at which the first image is acquired;
   detecting the object from the second image; and
   designating one character from the specified character group, based on a second position of the object detected from the second image.

2. The character input method according to claim 1, wherein the designating designates the one character, based on an amount of change between the first position and the second position and a direction of the change from the first position to the second position.

3. The character input method according to claim 2, wherein the object is a finger of a user,
   the method further comprising detecting a sliding operation by the user between the first image and the second image, based on a change between a center of gravity of a hand region in the first image and another center of gravity of the hand region in the second image, when the amount of change between the first position of the finger and the second position of the finger is equal to or greater than a threshold, and
   wherein the designating is performed when the sliding operation is detected.

4. The character input method according to claim 3, wherein the designating designates the one character from the character group, based on the first position in the first image, when the sliding operation is not detected.

5. The character input method according to claim 1, wherein the specifying specifies the character group, based on a position in a second-axis direction of the first position, when a position in a first-axis direction of the first position satisfies a specific condition.

6. The character input method according to claim 5, wherein the imaging device is mounted at a position at which the imaging device is capable of imaging movement of the object in each of the first-axis direction and the second-axis direction.

7. The character input method according to claim 5, further comprising:

   acquiring a third image when the one character is designated; and
   determining the one character as an input character when a position of the object in the first-axis direction in the third image satisfies a different specific condition.

8. The character input method according to claim 5, further comprising:

   displaying, when the character group is specified, a screen in which the plurality of characters included in the character group are arranged in a direction different from the first-axis direction.

9. An information processing apparatus comprising:

an acquiring unit configured to acquire, from an imaging device, a first image and a second image captured after the first image;

a storing unit configured to store correspondence information in which each of a plurality of character groups including a plurality of characters is associated with each of a plurality of regions set for the first image;

a specifying unit configured to detect an object from the first image, refer to the correspondence information in the storing unit, and specify a character group corresponding to a first position of the object detected from the first image; and

a determining unit configured to detect the object from the second image and designate one character from the specified character group, based on a second position of the object detected from the second image.

10. A computer-readable recording medium storing a program for causing a computer to execute a process for character input, the process comprising:

acquiring a first image from an imaging device;

detecting an object from the first image;

specifying a character group corresponding to a first position of the object detected from the first image, based on correspondence information in which each of a plurality of character groups including a plurality of characters is associated with each of a plurality of regions set for the first image;

acquiring a second image acquired from the imaging device at a time different from a time at which the first image is acquired;

detecting the object from the second image; and

designating one character from the specified character group, based on a second position of the object detected from the second image.

# FIG. 1

FIG. 2

ACQUIRING UNIT 31

SETTING UNIT 32

SPECIFYING UNIT 34

STORING UNIT 33

DISPLAY CONTROL UNIT 35

DETERMINING UNIT 36

10

# FIG. 3

| FIRST SETTING INFORMATION | ~ 331 |
| 300 | |

| SECOND SETTING INFORMATION | ~ 332 |
| 320 | |

# FIG. 4

# FIG. 5

# FIG. 6

| REGION ID | CHARACTER GROUP ID | CHARACTER INFORMATION 1 | CHARACTER INFORMATION 2 | CHARACTER INFORMATION 3 |
|-----------|--------------------|--------------------------|--------------------------|--------------------------|
| L-1 | G-1 | Q | A | Z |
| L-2 | G-2 | W | S | X |
| L-3 | G-3 | E | D | C |
| L-4 | G-4 | R | F | V |
| L-5 | G-5 | T | G | B |
| R-1 | G-6 | Y | H | N |
| R-2 | G-7 | U | J | M |
| R-3 | G-8 | I | K | , |
| R-4 | G-9 | O | L | . |
| R-5 | G-10 | P | ; | / |

## FIG. 7A

Q W E R T Y U I O P
A S D F G H J K L ;
Z X C V B N M , . /

## FIG. 7B

U J M

FIG. 8A

FIG. 8B

FIG. 8C

# FIG. 9

START

ACQUIRE IMAGE — OP.1

ACQUIRE IMAGE — OP.2

EXTRACT FINGER REGION — OP.3

OP.4
IS PRESSING OPERATION DETECTED?

NO →

OP.13
IS PREVIOUS FINGER POSITION STORED?

NO

YES ↓

SPECIFY CHARACTER GROUP — OP.7

STORE FINGER POSITION — OP.5

YES ↓

DESIGNATE INPUT CHARACTER — OP.14

DELETE FINGER POSITION — OP.15

END

OP.6
IS PREVIOUS FINGER POSITION STORED?

NO →

YES ↓

OP.8
IS MOVEMENT IN X-AXIS DIRECTION EQUAL TO OR GREATER THAN THRESHOLD?

NO →

YES ↓

OP.9
MOVEMENT IN POSITIVE DIRECTION?

NO →

YES ↓

DESIGNATE LEFT CHARACTER — OP.10

DESIGNATE RIGHT CHARACTER — OP.11

DESIGNATE CENTRAL CHARACTER — OP.12

25

# FIG. 10

E I A U O

# FIG. 11

START

ACQUIRE IMAGE — OP.1

EXTRACT HAND REGION — OP.2

EXTRACT FINGER REGION — OP.3

OP.4
IS PRESSING OPERATION DETECTED?

NO → OP.13
IS PREVIOUS FINGER POSITION STORED?

YES → OP.21
STORE FINGER POSITION AND CENTER OF GRAVITY OF HAND REGION

OP.7
SPECIFY CHARACTER GROUP

OP.14
DESIGNATE INPUT CHARACTER

OP.26
DELETE FINGER POSITION AND CENTER OF GRAVITY OF HAND REGION

OP.6
NO — IS PREVIOUS FINGER POSITION STORED?

END

OP.23
DESIGNATE CHARACTER THAT HAS BEEN DESIGNATED ON THE BASIS OF PREVIOUS FINGER POSITION

OP.24
DELETE FINGER POSITION AND CENTER OF GRAVITY OF HAND REGION

OP.25
SPECIFY NEW CHARACTER GROUP BASED ON CURRENT FINGER POSITION

OP.8
IS MOVEMENT IN X-AXIS DIRECTION EQUAL TO OR GREATER THAN THRESHOLD?

NO

YES — OP.22
IS POSITION OF CENTER OF GRAVITY OF HAND REGION CHANGED?

NO

YES — OP.9
MOVEMENT IN POSITIVE DIRECTION?

NO

OP.10
DESIGNATE LEFT CHARACTER

YES — OP.11
DESIGNATE RIGHT CHARACTER

OP.12
DESIGNATE CENTRAL CHARACTER

FIG. 12A

FIG. 12B

## FIG. 13A

## FIG. 13B

# FIG. 14

START

ACQUIRE IMAGE — OP.1

EXTRACT HAND REGION — OP.2

EXTRACT FINGER REGION — OP.3

OP.4
IS PRESSING OPERATION DETECTED? — NO

OP.7
SPECIFY CHARACTER GROUP

YES

STORE FINGER POSITION — OP.5

OP.6
NO — IS PREVIOUS FINGER POSITION STORED?

YES

NO

OP.13
IS PREVIOUS FINGER POSITION STORED?

YES

OP.30
IS MOVEMENT IN X-AXIS DIRECTION EQUAL TO OR GREATER THAN THRESHOLD?

YES

OP.31
NO — MOVEMENT IN POSITIVE DIRECTION?

NO

OP.32
DESIGNATE LEFT CHARACTER

YES

OP.33
DESIGNATE RIGHT CHARACTER

OP.34
DESIGNATE CENTRAL CHARACTER

DELETE FINGER POSITION — OP.35

END

30

# FIG. 15A

y

T=t2

T=t1

x

# FIG. 15B

y

T=t2

T=t1

x

# FIG. 15C

y

T=t2

T=t1

x

EP 2 677 397 A2

31

FIG. 16

# FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003288156 A